# FASCICULE DE BREVET EUROPEEN

(11) **EP 1 964 138 B1**
(45) Date de publication et mention de la délivrance du brevet: **28.11.2012**
(21) Numéro de dépôt: 06807096.0
(22) Date de dépôt: 09.10.2006
(51) Int. Cl.: H01G 9/08, H01G 9/06

(54) **SYSTÈME DE STOCKAGE D'ÉNERGIE ÉLECTRIQUE**
ELEKTRISCHES ENERGIESPEICHERSYSTEM
ELECTRICAL ENERGY STORAGE SYSTEM

(30) Priorité: 05.12.2005 FR 0512319
(43) Date de publication de la demande: 03.09.2008
(73) Titulaire: Batscap, 29500 Ergué-Gabéric (FR)
(72) Inventeur: CAUMONT, Olivier, F-29000 Quimper (FR); HUIBANT, René, F-29390 Scaer (FR); MINARD, Jean-François, F-29370 Elliant (FR)
(74) Mandataire: Texier, Christian
(86) Numéro de dépôt international: PCT/EP2006/067210
(87) Numéro de publication internationale: WO 2007/065748

(56) Documents cités:
- DE-A1- 4 114 756
- DE-B- 1 281 581
- GB-A- 846 083
- US-B1- 6 366 446

## Description

### Domaine de l'invention

L'invention concerne les ensembles de stockage d'énergie électrique. Elle s'applique, en particulier, mais non limitativement, aux supercondensateurs, condensateurs, et générateurs ou batteries. Plus précisément, la présente invention concerne l'étanchéité et la connexion électrique d'un ensemble de stockage d'énergie électrique.

### Présentation de l'Art antérieur

Un nombre important d'ensembles de stockage d'énergie électrique, dits de haute puissance, ont récemment été proposés, comme, par exemple, les supercondensateurs.

Cependant, les dispositifs connus ne donnent pas totalement satisfaction quant à leur étanchéité et leur connexion de puissance.

De manière conventionnelle, un supercondensateur comprend un élément bobiné constitué d'un empilement de feuilles (anode, collecteur, anode, séparateur, cathode, collecteur, cathode, séparateur) enroulé sur lui-même et dont dépasse à chaque extrémité une des feuilles appelée collecteur de courant. Cet élément bobiné est placé dans une enveloppe comprenant un corps principal fermé, au moins à l'une de ses deux extrémités, par un couvercle.

Selon l'état de la technique, pour réaliser un tel ensemble de stockage d'énergie électrique, le couvercle est fixé au corps principal de l'enveloppe par un assemblage mécanique tel que par sertissage, vissage ou roulage, (rabat du bord du corps principal sur le couvercle écrasant un joint d'étanchéité situé entre les deux).

D'autre part, on citera également l'utilisation régulière de pièces de liaison électrique pour réaliser la connexion électrique, à l'intérieur du corps principal de l'enveloppe, entre chaque couvercle muni d'un plot de liaison électrique et l'élément bobiné.

Certaines conceptions utilisent comme pièce de liaison électrique le collecteur de courant dépassant de l'élément bobiné et découpé pour former un ou plusieurs empilements de languettes collectrices de courant, ces languettes étant ensuite reliées au plot de liaison électrique du couvercle.

Cependant, ces réalisations sont complexes et conduisent à des ensembles de stockage d'énergie électrique volumineux.

D'autre part, le courant n'est pas uniformément distribué dans l'élément bobiné du fait que toutes les spires ne sont pas connectées au plot de liaison électrique. Cette caractéristique favorise les concentrations ioniques et électroniques dans certaines spires au détriment d'autres, conduisant alors à :
- une augmentation de résistance série qui a des conséquences néfastes sur les performances de l'élément de stockage d'énergie (baisse de l'énergie et de la puissance disponibles),
- un échauffement favorisé par une mauvaise évacuation de la chaleur interne par les collecteurs de courant et
- une localisation voire une accélération du vieillissement de l'élément de stockage d'énergie.

D'autres réalisations proposent alors le soudage (cf. GB-A-846083), par une technique de laser par transparence, d'une pièce de connexion électrique intermédiaire placée entre l'élément bobiné et chacun des couvercles.

Toutefois, ces conceptions sont complexes en raison de la multiplication des actes à réaliser. De plus la présence de cette pièce intermédiaire alourdit la conception de l'ensemble de stockage d'énergie électrique en termes de masse.

On peut citer, également, une conception d'ensemble de stockage d'énergie électrique où l'élément bobiné est directement plaqué et soudé contre les couvercles pour optimiser le volume de l'ensemble.

Dans ce cas cependant, les fermetures mécaniques des couvercles empêchent les zones de soudure présentes sur les couvercles d'entrer en contact avec toutes les spires de l'élément bobiné et limitent alors également la quantité de spires soudées.

D'autre part, toutes ces réalisations de supercondensateurs ont comme point commun de présenter des défauts d'étanchéité.

En effet, le vieillissement de ces ensembles de type supercondensateurs conduit à une génération de gaz dans l'enveloppe de l'élément de stockage d'énergie électrique qui entraîne une montée en pression à l'intérieur de l'enveloppe.

Les fermetures classiques par roulage ou par vissage des couvercles sur le corps principal de l'enveloppe ne sont pas aptes à résister à cette montée en pression et engendrent des pertes d'étanchéité de l'ensemble de stockage d'énergie électrique, d'où parfois des fuites de solvant, voire dans le pire des cas, son ouverture brutale.

Par ailleurs, à l'heure actuelle, ces assemblages mécaniques d'ensembles de stockage d'énergie électrique nécessitent, lors de la mise en module des ensembles, l'ajout d'une pièce de liaison électrique entre chaque couple d'ensembles voisins en vue de les connecter électriquement.

Dans certaines conceptions, ces pièces de types barrette dure ou souple, tresse ou empilement de feuillards, sont vissées sur chacun des plots de liaison électrique respectifs d'un couple d'ensembles de stockage d'énergie électrique.

Ces conceptions de modules nécessitent souvent un traitement coûteux des pièces, tel que l'étamage ou le nickelage, pour assurer un contact électrique optimal par vissage

D'autres réalisations prévoient le soudage de ces pièces. Mais les élévations de température créées par la soudure limitent souvent sa réalisation sur éléments non finis et conduisent la plupart du temps à assembler les modules avant la phase de remplissage d'électrolyte, ce qui complique fortement le procédé de fabrication.

La réalisation de ces assemblages modules par ajout de pièces de connectique est longue et complexe.

L'invention a notamment pour but de pallier les inconvénients de l'art antérieur.

Un autre but de la présente invention est de proposer un système de stockage d'énergie électrique présentant une configuration facile à réaliser tout en proposant une connexion électrique simple et sécurisée.

Un autre but de la présente invention est de proposer un système de stockage d'énergie électrique présentant un système d'étanchéité fiable dans le temps, résistant à des pressions internes très élevées et dont l'étanchéité, ajustable, peut atteindre des valeurs inférieures à 10⁻⁹ mbar.l.s⁻¹.

Il est également désirable de proposer des systèmes de stockage d'énergie électrique qui offrent une économie en termes de coûts, de poids, d'espace, de temps dans leur réalisation.

Un autre but de la présente invention est de proposer un système de stockage d'énergie électrique qui facilite son association avec d'autres systèmes similaires pour former un module de stockage d'énergie électrique.

### Résumé de l'invention

Ces buts sont atteints, selon l'invention, grâce à un système de stockage d'énergie électrique comprenant au moins un élément bobiné de stockage d'énergie électrique placé à l'intérieur d'une enveloppe, ladite enveloppe renfermant l'élément bobiné de stockage d'énergie électrique dans un corps principal de l'enveloppe et comprenant au moins un couvercle, caractérisé en ce que ledit couvercle, disposé à une extrémité du corps principal de l'enveloppe et connecté électriquement par des moyens de liaison électrique à l'élément bobiné de stockage d'énergie électrique, est fixé au corps principal de l'enveloppe par un moyen de collage.

Selon une autre caractéristique avantageuse de l'invention, le moyen de collage est disposé de façon à surmonter un joint de positionnement intercalé entre le corps principal de l'enveloppe et le couvercle.

Selon une autre caractéristique avantageuse de l'invention, le joint de positionnement et le moyen de collage sont disposés dans une gorge annulaire délimitée par le corps principal de l'enveloppe et une collerette présente sur ledit couvercle.

Selon une autre caractéristique avantageuse de l'invention, au moins deux systèmes de stockage d'énergie électrique selon l'invention peuvent former un module de stockage d'énergie électrique en utilisant une pièce unique électriquement conductrice comprenant deux ou plusieurs couvercles, venus de matières ou solidaires par assemblage, qui renferment respectivement des éléments bobinés de stockage d'énergie électrique disposés dans des corps principaux d'enveloppe juxtaposés.

### Brève description des figures

L'invention sera mieux comprise et d'autres avantages et caractéristiques apparaîtront à la lecture de la description qui va suivre, donnée à titre d'exemples non limitatifs, et grâce aux dessins annexés parmi lesquels:
- La figure 1 illustre une vue en coupe longitudinale d'un système de stockage d'énergie électrique selon l'invention;
- La figure 1a représente une vue en coupe similaire d'une variante dont les couvercles ont une double collerette ;
- La figure 1b représente une vue en coupe longitudinale d'une autre variante dont le corps principal d'enveloppe forme des doubles collerettes pour emprisonner les couvercle ;
- La figure 2 illustre une vue en coupe longitudinale d'une autre variante de la figure 1;
- La figure 3 illustre une vue en perspective du dessus d'un couvercle d'un système de stockage d'énergie électrique selon l'invention;
- La figure 4 illustre une vue en perspective du dessous d'un couvercle d'un système de stockage d'énergie électrique selon l'invention;
- La figure 5a illustre une vue de dessus d'un couvercle d'un système de stockage d'énergie électrique selon l'invention muni de moyens de liaison électrique, tandis que la figure 5b illustre le même couvercle selon une section longitudinale passant par les demis plans de coupe référencés V-V sur la figure 5a;
- La figure 6a illustre une vue de dessus d'une variante de
couvercle d'un système de stockage d'énergie électrique selon l'invention muni de moyens de liaison électrique, tandis que la figure 6b illustre le même couvercle selon une section longitudinale passant par les demis plans de coupe référencés VI-VI sur la figure 6a ;
- La figure 7a illustre une vue de dessus d'une autre variante de couvercle d'un système de stockage d'énergie électrique selon l'invention muni de moyens de liaison électrique, tandis que la figure 7b illustre le même couvercle selon une section longitudinale passant par les demis plans de coupe référencés VII-VII sur la figure 7a ;
- La figure 8 illustre une vue de dessus d'un couvercle conforme à une autre variante de l'invention;
- La figure 9 illustre une vue en coupe longitudinale d'une barrette de liaison conforme à l'invention;
- Les figures 10a et 10b illustrent, en coupe longitudinale, une variante de réalisation de système de stockage d'énergie électrique conforme à la présente invention dans laquelle le corps principal d'enveloppe est muni d'un soufflet d'expansion, respectivement en position de repos sur la figure 10a et après extension du soufflet sur la figure 10b ;
- Les figures 11a, 11b, 11c et 11d illustrent des vues en coupe de quatre variantes de joints de positionnement;
- La figure 12 illustre un schéma synoptique des différentes étapes d'un procédé de réalisation d'un système de stockage d'énergie électrique selon l'invention;
- La figure 13 illustre une vue en coupe longitudinale d'un module de stockage d'énergie électrique selon l'invention réalisé à l'aide de deux systèmes associés;
- La figure 14 illustre une vue de dessus d'une pièce bi-couvercles d'un module de stockage d'énergie électrique selon l'invention;
- Les figures 15a et 15b illustrent, respectivement, une vue de dessus et une vue latérale d'un module de stockage d'énergie électrique selon l'invention réalisé à l'aide d'un nombre plus important de systèmes associés; et
- La figure 16 montre une vue en coupe longitudinale d'une variante de système de stockage d'énergie selon l'invention comprenant un canal tubulaire central permettant le passage d'un fluide caloporteur à des fins de régulation thermique du système.

### Description détaillée de l'invention

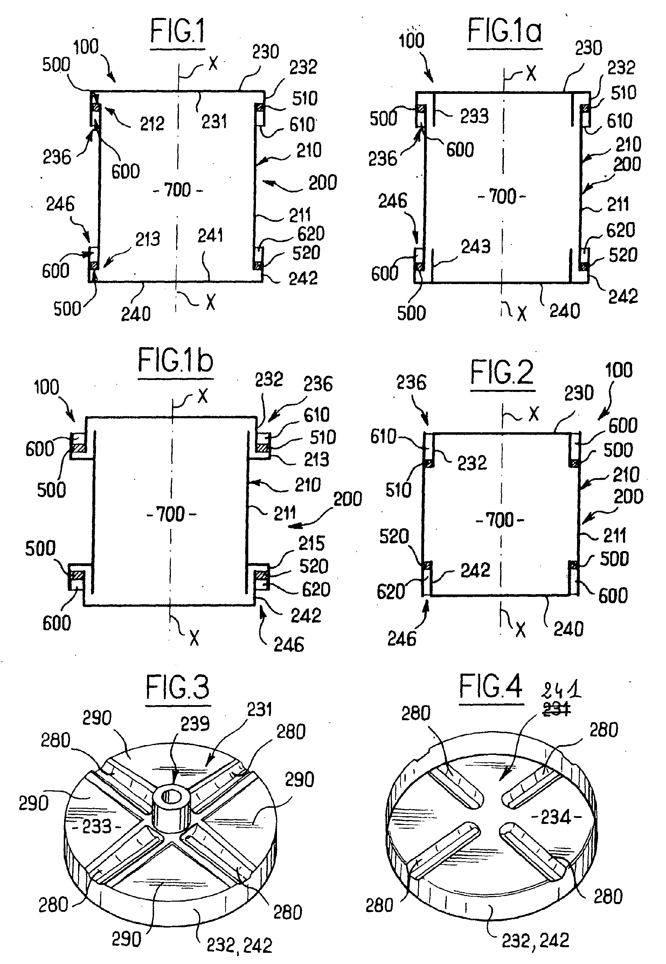

- La figure 1 illustre un système de stockage d'énergie électrique 100 selon l'invention.
- Un système de stockage d'énergie électrique 100 comprend une enveloppe 200 formée d'un corps principal 210 recevant un élément bobiné de stockage d'énergie électrique et de deux couvercles 230 et 240 fermant le corps principal 210 de l'enveloppe 200 à ses deux extrémités. Il comprend également sur les couvercles 230 et 240, des moyens de liaison électrique 280 (voir figure 3) destinés à assurer une liaison électrique entre les couvercles 230, 240 et ledit élément bobiné.

Le corps principal 210 de l'enveloppe 200 se présente sous la forme d'un cylindre 211, ouvert à ses deux extrémités 212 et 213 et centré sur un axe X-X.

Avantageusement, ce cylindre 211 est rigide et léger.

De préférence, il est en aluminium et son épaisseur est comprise entre 0.4 et 1 mm.

Selon une variante de réalisation du système de stockage d'énergie électrique le cylindre 211 est en matière plastique.

D'autre part, ce cylindre 211 a un diamètre interne et une longueur adaptés à l'élément bobiné de stockage d'énergie électrique qu'il contient.

Cependant, une variante de réalisation prévoit une longueur de cylindre 211 plus petite que celle de l'élément bobiné de stockage d'énergie électrique, de façon à mettre ce dernier sous pression lors de la fermeture du corps principal 210 de l'enveloppe 200 par les deux couvercles 230 et 240.

L'élément bobiné placé dans le corps principal 210 de l'enveloppe 200 peut faire l'objet de nombreuses variantes de réalisation. Il ne sera donc pas décrit dans le détail par la suite. Il n'est pas non plus illustré dans le détail sur les figures annexées. Cependant il est schématisé sur la figure 1 sous la référence 700.

Dans un mode de réalisation de l'invention, l'élément bobiné de stockage d'énergie électrique est une bobine cylindrique centrée sur l'axe X-X.

Elle est formée, d'une manière connue en soi, d'un empilement de feuilles (anode, collecteur, anode, séparateur, cathode, collecteur, cathode, séparateur) enroulées autour d'un axe central qui coïncide après assemblage avec l'axe X-X, avec ou sans présence d'un support solide central, et dont dépasse à chaque extrémité l'une, appelée collecteur de courant, des feuilles composant l'empilement.

En effet, l'élément bobiné de stockage d'énergie électrique est délimité à ses deux extrémités opposées, respectivement, par deux tranches collectrices de courant, en forme de spirale.

Celles-ci sont destinées à être connectées aux moyens de liaison électrique 280 des deux couvercles 230 et 240 qui les recouvrent comme cela sera décrit plus loin en relation avec les figures 3 à 9 notamment.

Par ailleurs, les deux couvercles 230 et 240 électriquement conducteurs se présentent, chacun, respectivement, sous la forme d'un disque de connexion électrique 231 et 241, disposé perpendiculairement à l'axe X-X.

Chacun de ces disques 231 et 241 comprend, respectivement, le long de sa périphérie extérieure, une collerette 232, 242, formée d'une jupe cylindrique centrée sur l'axe X-X.

Préférentiellement, chacun des couvercles 230, 240 est rigide et en aluminium.

L'épaisseur de chacun des disques de connexion électrique 231 et 241 est conçue pour garantir, d'une manière connue en soi, une section de passage de courant suffisante en fonction du rayon des disques 231 et 241.

D'autre part, dans la variante de réalisation de l'invention de la figure 1, le diamètre externe de chacun des disques de connexion électrique 231 et 241 est supérieur au diamètre externe du cylindre 211.

Ainsi, les collerettes 232 et 242 sont placées sur l'extérieur de la paroi externe du cylindre 211. De ce fait cette dernière et la paroi interne de chacune des collerettes 232 et 242 des couvercles 230 et 240 disposés sur les extrémités 212 et 213 opposées du cylindre 211, délimitent, respectivement, deux gorges annulaires 236 et 246, externes au corps principal de l'enveloppe 200.

Dans un mode de réalisation préféré de l'invention, afin de positionner et fixer chacun des couvercles 230 et 240 aux deux extrémités 212 et 213 du cylindre 211, on utilise un système comprenant à base de joint de positionnement 500 et un moyen de collage 600.

Dans la variante de réalisation illustrée sur la figure 1, deux joints de positionnement 510 et 520, annulaires, sont montés serrés sur le cylindre 211 au niveau de ses deux extrémités 212 et 213 et, plus précisément, des gorges annulaires 236 et 246.

Ces joints 510 et 520 ont pour premier rôle d'assurer l'isolation électrique entre le corps principal 210 de l'enveloppe 200 logeant l'élément bobiné de stockage d'énergie électrique et chacun des deux couvercles 230 et 240.

Ainsi, de préférence, ils sont en une matière électriquement non conductrice, par exemple de type polytetrafluoroéthylène (PTFE) chargé verre ou non, ou en plastique, de type polyphénylène Ryton®.

Le second rôle des joints 510 et 520 est celui de support du moyen de collage 600, avant et pendant sa polymérisation, permettant à ce dernier de ne pas couler à l'intérieur du cylindre 211 pour éviter de détériorer l'élément bobiné de stockage d'énergie électrique.

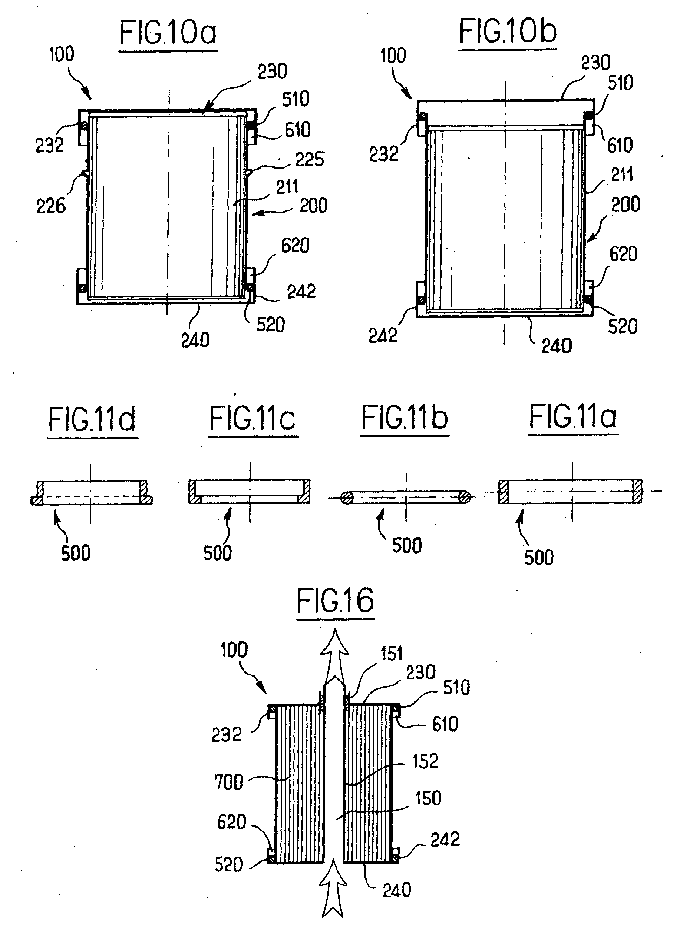

Ainsi, tel qu'illustré sur la figure 11a, les joints de positionnement 510 et 520 peuvent avoir une section transversale rectangulaire.

Cependant, comme illustré sur les figures 11b, 11c et 11d les joints de positionnement 510 et 520 peuvent faire l'objet de nombreuses variantes de réalisation, avec par exemple des sections transversales, respectivement, circulaires (figure 11b), en forme de L avec la concavité du L tournée globalement radialement vers l'intérieur, soit vers le corps principal 211 de l'enveloppe 200 (figure 11c) ou inversement (figure 11d).

Les joints de positionnement 510 et 520 sont ainsi surmontés, respectivement, dans les gorges annulaires 236 et 246 par un moyen de collage 610 et 620 pour fixer le corps principal 211 de l'enveloppe 200 avec chacun des couvercles 230 et 240. Par « surmontés» on entend dans le cadre de la présente description, le fait que les moyens de collage 610 et 620 sont placés sur l'extérieur des joints de positionnement 510 et. 520 en référence au chemin conduisant du volume interne du cylindre 211 à l'extérieur de celui-ci, en passant par le passage formé entre le cylindre 211 et les couvercles 230 et 240.

La hauteur, considérée parallèlement à l'axe X-X, des moyens de collage 610 et 620 déposés sur toute la circonférence des gorges annulaires 236 et 246, en contact avec chacun des couvercles 230 et 240 et le cylindre 211, est adaptée pour ne pas dépasser la hauteur de chacune des collerettes 232 et 242 des couvercles 230 et 240.

D'autre part, la hauteur ajustable des moyens de collage 610 et 620 offre une étanchéité variable au système de stockage d'énergie électrique 100. En effet, une hauteur de colle importante augmente la tenue du système 100 à la surpression interne du corps principal 211 de l'enveloppe 200 et prévient contre l'ouverture de l'enveloppe 200 sous l'effet de cette pression.

Typiquement, l'étanchéité obtenue au moyen d'un collage conforme à la présente invention entre le cylindre 211 et les couvercles 230 et 240 d'un supercondensateur, peut atteindre des valeurs très basses, inférieures à 10⁻⁹ mbar.l.s⁻¹. Ces valeurs sont très nettement inférieures à celles communément rencontrées sur les produits du marché. Cet excellent niveau d'étanchéité obtenu par collage évite de laisser pénétrer de l'oxygène ou de l'eau à l'intérieur du supercondensateur, ce qui aurait pour conséquence une accélération du vieillissement et donc une diminution de la durée de vie du produit.

Avantageusement, ces moyens de collage 610 et 620 sont une colle étanche aux gaz et aux liquides, et électriquement isolante, de type époxy thermodurcissable.

Préférentiellement, cette dernière est adaptée au collage aluminium/ aluminium comme, par exemple, la colle DELO Monopox^{®} 1196 du fabricant DELO.

Dans une variante de réalisation de l'invention où le cylindre 211 est en plastique, la colle sera spécifique au collage plastique/aluminium.

D'autre part, chaque joint de positionnement 510 et 520 doit être résistant à la température de polymérisation de la colle utilisée, ainsi qu'à tout solvant qui sera utilisé dans l'élément bobiné de stockage d'énergie électrique.

Les joints de positionnement 510 et 520 ont, également, avantageusement, une surface externe suffisamment glissante pour permettre aux deux couvercles 230 et 240 une légère latitude de déplacement par rapport au cylindre 211, afin de permettre une installation facile de ces derniers sur le cylindre 211.

Cette latitude de déplacement est utilisée pour laisser un jeu permettant une mise en pression lors de la connexion électrique de l'élément bobiné de stockage d'énergie électrique aux couvercles 230 et 240 tel que cela sera décrit plus loin en relation avec les figures 3 à 8.

La figure 2 illustre une variante de réalisation de la figure 1.

Elle propose deux couvercles 230 et 240 présentant, chacun, des disques de connexion électrique 231 et 241 avec un diamètre externe inférieur à celui du cylindre 211.

Dans ce cas les collerettes 232 et 242 sont placées à l'intérieur du cylindre 211.

Chacune des gorges annulaires 236 et 246, délimitée par les faces externes des collerettes 232 et 242 et la paroi interne du cylindre 211, devient alors interne au cylindre 211.

Dans ce cas, chaque joint de positionnement 510 et 520 est monté, respectivement, serré sur les couvercles 230 et 240, plus précisément sur les collerettes 232 et 242, à l'intérieur du cylindre 211, avec une surface externe glissante pour permettre au cylindre 211 une légère latitude de déplacement par rapport à chacun des couvercles 230 et 240.

De façon similaire à la figure 1, chaque joint de positionnement 510 et 520 est surmonté, respectivement, par une hauteur de colle 610 et 620 dans les gorges annulaires 236 et 246 pour fixer le corps principal 211 de l'enveloppe 200 avec chacun des couvercles 230 et 240.

Une autre variante de réalisation d'un système de stockage d'énergie électrique 100 propose de remplacer chacun des joints de positionnement 510 et 520 précités par une certaine épaisseur d'une couche de type élastomère ou plastique sur là paroi externe du cylindre 211 ou des collerettes 232 et 242 des couvercles 230 et 240.

Une telle couche tenant lieu de joint de positionnement, s'étend le long du corps principal 211 de l'enveloppe 20, selon une hauteur adapté à celle des collerettes 232 et 242.

Dans la variante de la figure la, chaque couvercle 230, 240 comporte une double collerette 232, 233 et 242, 243, qui forment une gorge 236, 446 dans laquelle on vient disposer une extrémité du cylindre 211 avec, en fond de gorge, un joint de positionnement 510, 520 et entre le joint et l'extérieur de la gorge, un moyen de collage 600 selon l'invention.

Dans une autre variante, illustrée sur la figure 1b, c'est le cylindre 211 qui comporte à chacune de ses extrémités, une collerette externe supplémentaire référencée 213, 215. Cette dernière forme avec l'extrémité du cylindre 211 une gorge 236, 246 dans laquelle on vient disposer la collerette 232, 242 d'un couvercle 230, 20 avec, en fond de gorge un joint de positionnement 510, 520 et entre le joint et l'extérieur de la gorge, un moyen de collage 600 selon l'invention.

Plusieurs configurations des couvercles 230 et 240 pouvant refermer l'enveloppe 200 contenant l'élément bobiné de stockage d'énergie électrique, vont maintenant être décrites en relation avec les figures 3 à 8.

De manière générale, chaque couvercle 230 ou 240 présente un disque de connexion électrique 231 muni de plages de rigidité 290 et de plages de soudage 280.

Les plages de rigidité 290 ont une double fonction : d'une part un rôle mécanique de rigidité et d'autre part un rôle de conducteur électrique pour le passage de courant. Les plages de soudage 280 sont utilisées comme moyens de liaison électrique pour réaliser la connexion électrique entre l'élément bobiné de stockage d'énergie électrique et le couvercle 230 ou 240.

Par ailleurs, tel qu'illustré sur la figure 3, chaque couvercle 230, voire 240, comprend sur sa face externe 233, opposée à l'intérieur du corps principal 211 de l'enveloppe 200, un plot de liaison électrique 239.

Ce dernier est de forme cylindrique de révolution et disposé au centre du disque de connexion électrique 231.

D'autres variantes de plots de liaison électrique 239 sont possibles. Elles ne sont pas limitées à l'exemple illustré sur la figure 3. On peut citer, comme exemples non limitatifs, des plots de liaison électrique à visser femelle ou mâle, des anneaux ou encore des plots tronconiques échancrés.

Les plages de rigidité 290 et les plages de soudage 280 sont réparties angulairement uniformément autour du plot de liaison électrique 239.

D'autre part, l'épaisseur des différentes plages de soudage 280 est calibrée pour le soudage laser par transparence comme cela sera notamment décrit en relation avec la figure 4. Elle est de l'ordre de 0.4 à 1 mm et, préférentiellement, de 0.7 à 0.8 mm.

En variante l'opération de liaison électrique entre les couvercles 230, 240 et l'élément bobiné est réalisée par brasage diffusion, notamment par brasage-diffusion à froid avec apport de gallium. Dans le cas d'une telle liaison par brasage ou brasage-diffusion, l'épaisseur des zones soudées sera de préférence comprise entre 0,4mm et 3mm.

En alternative au soudage laser par transparence, on pourra également réaliser la connexion par soudage à l'aide de toute autre technique classique appropriée.

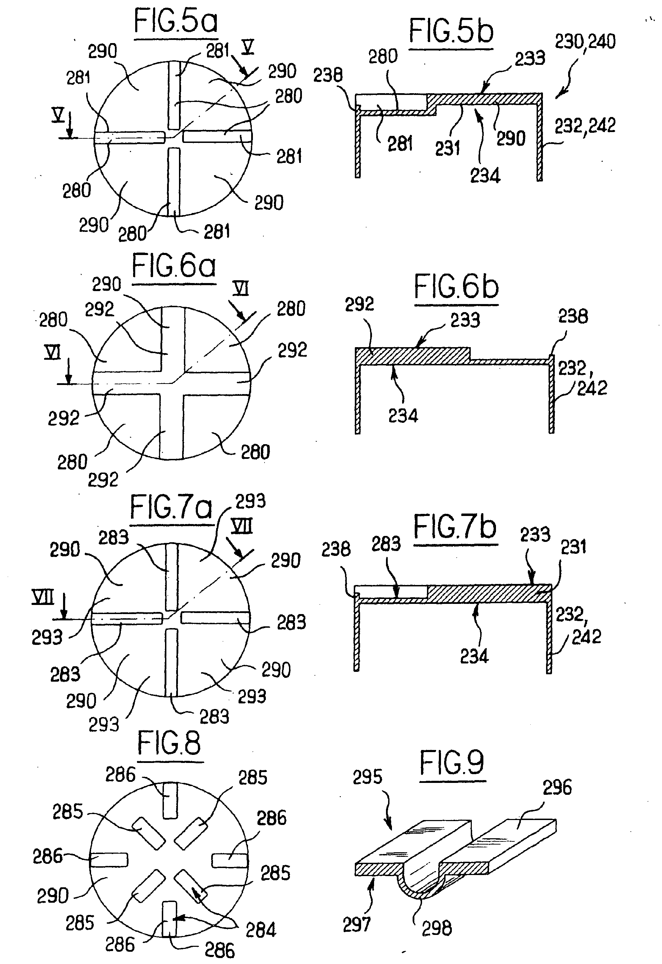

De plus, comme illustrée sur les figures 5b, 6b et 7b, la collerette 232 (ou 242) du couvercle 230 (ou 240) peut être prolongée au niveau de chaque plage de soudage 280 pour déboucher sur la face externe 233 du disque 231 et former un rebord 238 permettant de créer une cuvette, par exemple une cuvette réceptrice de colle ou autre résine. Les plages de connexion sont ainsi rendues étanches aux fluides après leur connexion, par apport d'une couche de colle ou de résine sur toute leur surface.

Selon la première variante de réalisation illustrée figure 3, le couvercle 230 possède un disque de connexion électrique 231 initialement plan, en partie embouti selon au moins une génératrice qui correspond globalement avec un rayon dressé à partir de l'axe X-X pour former au moins une nervure radiale constituant une plage de soudage 280 sous forme d'au moins un bossage 281 convexe vers l'intérieur du corps principal 211 de l'enveloppe 200. Selon la figure 3 il est ainsi prévu quatre bossages 281 équirépartis autour de l'axe X-X. Dans ce cas les plages de rigidité 290 sont délimitées par un contour en secteur de cercle entre deux plages de soudure 280.

Comme on le comprend à l'examen de la figure 4, sur la face interne 234 du disque de connexion électrique 231, la génératrice de chaque bossage 281 sert de surface d'appui pour l'élément bobiné de stockage d'énergie électrique.

Plus précisément, la tranche collectrice de courant de l'élément bobiné de stockage d'énergie électrique, concave vers l'intérieur de l'élément, s'engage de façon complémentaire avec les différents bossages 281 du couvercle 230 auquel elle est, ensuite, connectée électriquement par soudage le long des génératrices de ces derniers.

Tel qu'illustré sur la figure 5a, les bossages 281, de section transversale parabolique ou trapézoïdale, sont de préférence répartis angulairement uniformément autour de l'axe X-X du plot de liaison électrique 239.

Ils s'étendent, en longueur, radialement par rapport à l'axe X-X et débouchent sur l'extérieur du disque 231.

D'autres variantes de réalisation des couvercles 230 et 240 illustrées sur les figures 6 et 7, prévoient un couvercle comprenant un disque de connexion électrique 231 présentant une face interne 234 plate et d'une face externe 233 comportant des plages de rigidité 290 et des plages de soudure 280.

Les figures 6 illustrent une variante dans laquelle des plages de rigidité 290 se présentent sous la forme de nervures 292 radiales par rapport à l'axe X-X et débouchant sur l'extérieur du disque 231.

Elles forment, dans un exemple non limitatif de l'invention, sur la face externe 233 du disque, une croix à quatre branches.

Les plages de rigidité 290 alternent avec des plages de soudage 280 en forme de secteur de cercle, de plus faible épaisseur, qui s'étendent en largeur sur une zone minimale de 1 à 3 mm.

Les figures 7 illustrent une autre variante dans laquelle des plages de soudage 280 se présentent sous la forme d'évidements 283 radiaux par rapport à l'axe X-X (quatre évidements 283 équirépartis autour de l'axe X-X selon les figures 7, mais cet exemple n'est pas limitatif) tandis que le reste du disque 231 avec son épaisseur principale se présente comme une suite de plages de rigidité 293 ayant chacune la géométrie d'un secteur de cylindre.

Ces évidements 283, de section droite sensiblement rectangulaire, répartis uniformément sur le disque 231 s'étendent radialement et débouchent sur l'extérieur du disque 231.

Les variantes de réalisation de couvercle 230 ou 240 présentant un disque 231 à face interne plate 234 peuvent être accompagnées d'une ou plusieurs barrette(s) de liaison 295, illustrée figure 9, pour réaliser la liaison électrique entre le couvercle 230 ou 240, à l'intérieur du corps principal 211 de l'enveloppe 200, et la tranche collectrice de courant de l'élément bobiné de stockage d'énergie électrique.

Cette barrette de liaison électrique 295 se présente par exemple sous la forme d'une pièce rectangulaire présentant une face externe 296 plate et une face interne 297 comprenant un bossage 298 s'étendant sur sa longueur.

Le bossage 298 de section transversale par exemple parabolique ou trapézoïdale, s'engagera côté convexe avec la tranche de l'élément bobiné de stockage d'énergie électrique embossée de manière complémentaire et sera fixée avec elle par soudage.

En variante la barrette de liaison électrique 295 se présente sous la forme d'une étoile regroupant plusieurs pièces présentant des bossages 298 organisés radialement autour du centre de l'étoile.

Cependant, dans le cas où le couvercle 230 ou 240 à face interne 234 plate est utilisé sans barrette de liaison 295, l'élément bobiné de stockage d'énergie électrique devra préférentiellement présenter, à ses deux extrémités, des tranches collectrices de courant planéifiées parallèlement à la face interne 234 du disque de connexion électrique 231 pour générer une grande surface d'appui continue lors de la liaison électrique entre le couvercle 230 ou 240 et l'élément bobiné.

Selon une autre variante de réalisation des couvercles 230 et 240 illustrée figure 8, pour souder toutes les spires de l'élément bobiné de stockage d'énergie électrique, bien que ces spires ne se trouvent pas sur un même rayon, il est prévu plusieurs séries de bossages 284 de section droite sensiblement rectangulaire, uniformément répartis angulairement sur le couvercle 230, et couvrant des extensions radiales variables sur la surface du couvercle 230.

Plus précisément, selon la figure 8, les bossages 284 sont divisés en deux séries 285 et 286. Plus précisément encore selon la figure 8, il est ainsi prévu une première série de bossages 285 radialement internes (par exemple quatre bossages 285) répartis uniformément angulairement autour de l'axe X-X et une deuxième série de bossages 286 radialement externes (par exemple également quatre bossages 286) qui alternent avec les bossages 285 et sont également angulairement répartis.

Ces bossages 284 sont de préférence tels que décrits en relation avec les figures 3 à 5.

Dans une variante de réalisation non représentée sur les figures mais que la description permettra à elle seule de comprendre, on peut intercaler entre les tranches collectrices et la partie intérieure du couvercle au moins une couche de feuille métallique conductrice mince, recouvrant au moins la surface des plages de connexion couvercle-tranches collectrices. Cette feuille mince est ajoutée pour compenser les manques éventuels de matière de connexion lors du soudage du couvercle sur les tranches collectrices.

Dans une autre variante du même type, la feuille métallique mince pourra être réalisée sous forme d'une étoile dont les branches recouvrent la surface des plages de connexion couvercle-tranches collectrices.

Enfin, si l'expérience montre que cela est souhaitable, on pourra ajouter plusieurs couches de feuilles métalliques minces aptes à apporter une quantité importante de matière de connexion sans nécessiter un apport énergétique important pour les souder.

Une autre façon, faisant partie intégrante de l'invention, de rapporter de la matière de connexion peut être de réaliser un shoopage sur les tranches collectrices de l'élément bobiné de stockage d'énergie afin d'améliorer le contact entre lesdites tranches et le couvercle ou la pièce intermédiaire de connexion.

Dans tous les cas décrits ci-dessus, les plages de connexion des tranches collectrices peuvent être réalisées par couchage radial des tranches collectrices depuis le centre vers l'extérieur de l'élément bobiné de stockage d'énergie, ceci afin d'augmenter la surface de contact entre lesdites tranches et le couvercle ou la pièce intermédiaire de connexion.

Par ailleurs, tel que l'illustrent les figures 10a et 10b, selon une variante de réalisation d'un système 100 conforme à l'invention, le corps principal 211 de l'enveloppe 200 est muni d'au moins un soufflet 225 anti-ouverture, en vue d'éviter une montée de pression interne lors du vieillissement du système de stockage d'énergie électrique 100 et, particulièrement la génération de gaz.

Chaque soufflet 225 est formé par exemple d'une nervure 226 annulaire couvrant toute la circonférence du cylindre 211.

Le soufflet 225 est calibré, en forme et en dimensions, pour permettre au cylindre 211 de s'allonger, par sa détente, sous l'effet de la montée de pression interne tout en conservant son étanchéité.

L'allongement du cylindre 211, tel qu'illustré figure 10b, provoque la déconnexion électrique entre l'élément bobiné de stockage d'énergie électrique et le couvercle 230 associé du fait que l'élément bobiné de stockage d'énergie électrique n'est, lui, pas extensible.

La rupture de la liaison électrique provoque l'arrêt du phénomène de vieillissement à l'origine de la montée en pression.

Le système de stockage d'énergie électrique 100 est, ainsi, sécurisé par sa mise en circuit ouvert.

En variante, un tel soufflet 225 de sécurité anti-ouverture en cas de surpression interne peut être disposé sur un couvercle 230 ou 240 entre la zone de collage du couvercle et l'intérieur de celui-ci.

Enfin, en regard de la figure 16, un perfectionnement de l'invention peut comprendre l'adjonction un canal tubulaire central 150 disposé à l'intérieur du bobinage de l'élément bobiné de stockage d'énergie, ledit canal 150 débouchant de part en part au travers d'au moins un des couvercles 230, 240, pour permettre la circulation d'un fluide caloporteur à des fins de régulation thermique du système.

Ce canal central 150 pourra être formé d'un tube 152 en aluminium creux, solidaire d'un des deux couvercles 230 ou 240 et collé sur l'autre couvercle par un moyen de collage coopérant avec une collerette centrale 151 appartenant audit autre couvercle. En variante, le tube 152 peut être indépendant de chaque couvercle mais collé à une collerette portée par chaque couvercle.

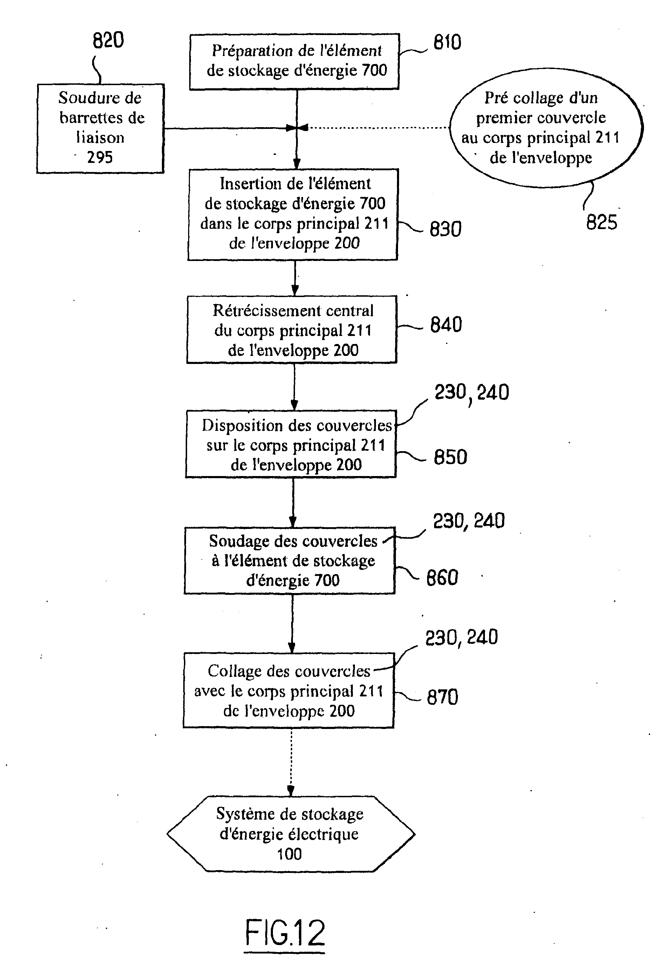

Un procédé de réalisation d'un système de stockage d'énergie électrique 100 selon l'invention est maintenant décrit en relation avec la figure 12.

Dans une première étape 810, les tranches collectrices de courant de l'élément bobiné de stockage d'énergie électrique sont préparées pour réaliser la liaison électrique entre l'élément et le type de couvercle 230 et 240 choisi pour fermer le corps principal 211 de l'enveloppe 200.

Plus précisément, si les couvercles 230 et 240 comportent un disque de connexion électrique 231 avec des bossages 281 tels que décrits en relation avec les figures 3 à 5, les tranches collectrices de courant de l'élément sont embossées de façon complémentaire à ces bossages 281 tandis que si les couvercles 230 et 240 comportent un disque de connexion électrique 231 avec une face interne 234 plate, les tranches collectrices de courant sont planifiées parallèlement à cette face interne 234.

D'autre part, si des barrettes de liaison 295 sont utilisées, elles sont soudées aux tranches collectrices de courant embossées de l'élément bobiné de stockage d'énergie électrique lors de l'étape 820, les tranches collectrices étant rabattues, ou non, par couchage radial depuis le centre vers l'extérieur de l'élément bobiné.

Ensuite, à l'étape 830, l'élément bobiné de stockage d'énergie électrique est inséré dans le cylindre 211 prémuni des joints de positionnement 510 et 520 à ses deux extrémités 212 et 213 opposées.

Il est ensuite centré et bloqué à l'intérieur du cylindre 211 par une opération de rétrécissement central de ce dernier (étape 840).

Les deux couvercles 230 et 240 sont ensuite disposés, respectivement, aux deux extrémités 212 et 213 opposées du cylindre 211 à l'étape 850.

On réalise alors, à l'étape suivante 860, la liaison électrique entre les couvercles 230 et 240 et l'élément bobiné de stockage d'énergie électrique par soudage au laser par transparence collectrices de courant de l'élément sur les plages de soudure 280 de chaque couvercle 230 et 240 avec lesquelles elles sont mises en contact par pression.

A l'étape 870, une hauteur de colle 600 est déposée dans l'une ou l'autre des gorges annulaires 236 et 246 et surmonte le joint de positionnement 510 ou 520 correspondant.

Le système 100 est ensuite porté à une certaine température pour polymériser la colle 600 selon des techniques bien connues en soi. On peut citer, comme exemples non limitatifs, une polymérisation soit à température ambiante, soit à température élevée, de façon globale grâce à un four ou, de façon locale par l'intermédiaire d'anneau chauffant par induction ou Infra rouge, soit par UV, ou tout autre moyen équivalent.

L'étape 870 est renouvelée pour le second couvercle 230 ou 240 de façon similaire.

On obtient ainsi un système de stockage d'énergie 100 selon l'invention.

Dans une variante de réalisation de ce procédé, on réalise un pré collage, à l'étape 825, de l'un des couvercles 230 ou 240 à une extrémité 212 ou 213 du corps principal 211 de l'enveloppe 200 pré équipé des joints de positionnement 510 et 520 avant l'insertion de l'élément bobiné de stockage d'énergie dans le cylindre 211 à l'étape 830.

Les étapes suivantes restent identiques à celles décrites précédemment si ce n'est que la dernière étape de collage 870 ne concernera plus que le collage du second couvercle 230 ou 240 avec le cylindre 211.

Dans une troisième variante de réalisation de ce procédé, l'étape de collage 870 des différents couvercles 230 et 240 avec le cylindre 211 est réalisée avant l'étape de soudage 860 des couvercles 230 et 240 sur l'élément bobiné de stockage d'énergie électrique.

Dans ce cas, le collage, à une puis à l'autre extrémité du corps principal 211 de l'enveloppe 200, s'effectue en maintenant les deux couvercles 230 et 240 sous pression sur les tranches collectrices de courant de l'élément bobiné de stockage d'énergie électrique en vue de garder un contact optimal avant soudage de l'élément avec chacun des couvercles 230 et 240.

Par ailleurs, une variante de réalisation d'un système de stockage d'énergie électrique 100 selon l'invention prévoit l'utilisation d'un cylindre 211 muni d'un fond plein ayant la forme d'un couvercle.

Dans ce cas, l'étape 840 de rétrécissement central du corps principal de l'enveloppe est supprimée. L'élément bobiné de stockage d'énergie électrique lié mécaniquement au cylindre 211 reste alors flottant avant l'étape de soudage 860.

D'autre part, une opération de collage d'un couvercle est supprimée à l'étape 870.

Dans une quatrième variante de réalisation du procédé, le soudage laser par transparence permettant de réaliser la liaison électrique entre l'élément bobiné de stockage d'énergie et les couvercles 230 et 240 est remplacé par un procédé de brasage/diffusion, par exemple brasage/diffusion Gallium.

Dans ce procédé, un dépôt de gallium est fait sur la face interne de chaque couvercle 230 et 240 et mis en contact avec les tranches collectrices de courant de l'élément. L'ensemble est alors brasé pour réaliser la connexion électrique des différents éléments.

Il faut noter que la réalisation de ce procédé entraîne l'utilisation de joints de positionnement 510 et 520 résistant aux températures de brasage/diffusion.

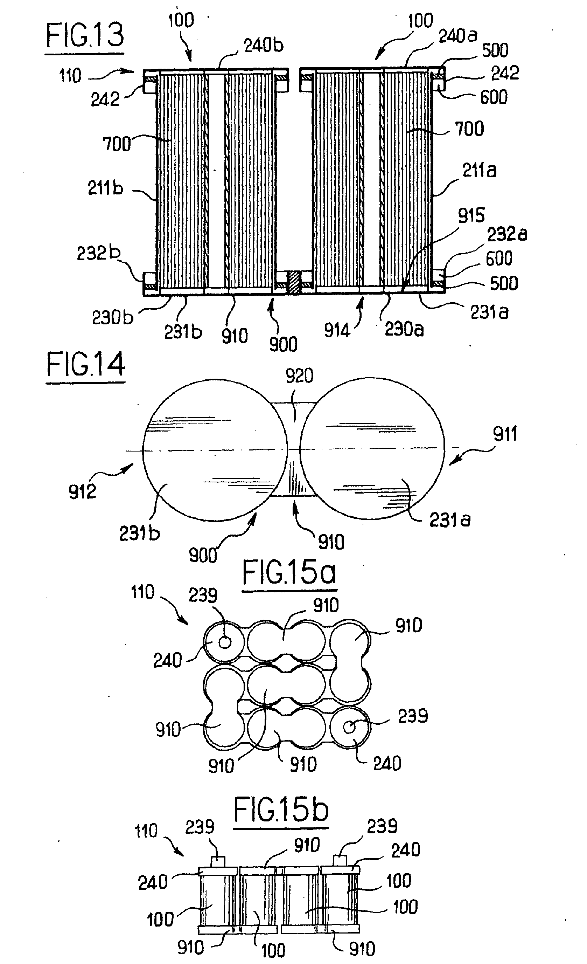

Ce procédé d'assemblage d'élément de stockage d'énergie peut être adapté pour être utilisé dans la réalisation d'un module de stockage d'énergie électrique 110 tel que celui-ci va maintenant être décrit en relation avec les figures 13 à 15.

La figure 13 illustre l'association de deux systèmes de stockage d'énergie électrique 100 formant un module de stockage d'énergie électrique 110.

Chacun des systèmes de stockage d'énergie électrique 100 est tel que décrit précédemment en relation avec les figures 1 et 2.

Cependant, à une même extrémité de chacun de leurs cylindres 211a et 211b respectifs, les deux systèmes 100 renferment leur élément bobiné de stockage d'énergie électrique 700 grâce à une pièce de connexion électrique commune 900 comprenant deux couvercles conducteurs 230a et 230b, destinés chacun à se fixer sur un des systèmes de stockage d'énergie électrique 100.

Cette pièce 900 est ainsi utilisée pour réaliser la liaison électrique entre les deux systèmes de stockage d'énergie électrique 100 juxtaposés.

Telle que l'illustre la figure 14, la pièce 900 a la forme d'une palette 910 qui comprend, respectivement, à chacune de ses extrémités 911 et 912 un disque de connexion électrique 231a et 231b muni sur sa circonférence d'une collerette 232a et 232b, et une barrette 920 centrale qui relie les deux disques 231a et 231b.

En revenant à la figure 13, la face externe 914 de la palette 910 est plate tandis que la face interne 915 de la palette 910 qui s'engage avec un corps principal 211 de chaque enveloppes 200a et 200b présente les deux collerettes 232a et 232b.

Le corps principal 211 de l'enveloppe 200 de chacun des deux systèmes de stockage d'énergie électrique 100 d'un tel module est fixé à cette pièce 900 et, plus précisément, chacun à un des couvercles 230a et 230b de la palette 910 par un ensemble joint de positionnement 500/moyen de collage 600.

Dans un exemple de réalisation où un module de stockage d'énergie électrique 110 comprenant deux systèmes 100 est destiné à être fonctionnel seul, les deux couvercles 240a et 240b indépendants l'un de l'autre et opposés à la palette 910 bi-couvercles, liés par soudage électriquement, à l'intérieur de chacun des corps principaux d'enveloppe 200, aux deux éléments bobinés de stockage d'énergie électrique, présentent, chacun, sur leur face externe un plot de liaison électrique 239.

Pour former un module 110 comprenant plus de deux éléments bobinés de stockage d'énergie électrique, telle que l'illustrent les figures 15a et 15b, l'enchaînement électrique des systèmes 100 s'effectue par le biais des palettes 910.

Selon la figure 15b, ces palettes 910 sont disposées, en alternance, comme bi-couvercle supérieur puis bi-couvercle inférieur des corps principaux 211 d'enveloppe 200 de couples de systèmes de stockage d'énergie électrique 100 juxtaposés.

Ainsi, pour réaliser un module de n éléments bobinés de stockage d'énergie électrique en association série, n étant supérieur ou égal à 3, les systèmes 100 seront reliés entre eux par paires au moyen de n-1 bi-couvercles 900. Les bi-couvercles 900 sont situés successivement à des extrémités opposées des systèmes de stockage d'énergie 100, et les systèmes disposés aux extrémités de l'association série constituant le module sont reliés à l'application externe au moyen de couvercles individuels 230, 240.

A l'inverse, si l'on souhaite réaliser un module 110 de n systèmes de stockage d'énergie électrique 100 en association parallèle, n étant supérieur ou égal à 2, toutes les extrémités isopotentielles des systèmes seront reliées entre elles d'un même côté par un couvercle unique comportant autant de moyens de connexion (collerette 232, 242, joint de positionnement 510, 520, colle 619, 620) que de systèmes à connecter en parallèle.

Enfin, si on veut réaliser un module 110 comprenant au moins une combinaison de mises en série ou de mises en parallèle de systèmes 100 ou de groupe de systèmes 100, l'homme de métier adaptera le nombre souhaité de couvercles simples 230, 240 et de bi-couvercles 900 combinés entre eux pour permettre les dites mises en série ou en parallèles des dits systèmes 100 ou groupes des systèmes 100.

Un système 100 prévu à une extrémité du module 110 présente un corps principal 211 fermé à une extrémité 213 par un couvercle 240 muni d'un plot de liaison électrique 239, plot utilisé comme l'une des deux bornes de sortie du module de stockage d'énergie électrique 110.

A l'extrémité 212 opposée, le même corps principal 211 est fermé par l'un des couvercles 230 d'une palette 910, l'autre couvercle 230 de la même palette 910 fermant le corps principal 211 de l'enveloppe 200, à la même extrémité 212, d'un système 100 juxtaposé.

Ce système 100 est lui-même relié à un autre système 100 juxtaposé par une autre palette 910 bi couvercle disposée à l'extrémité opposée de la première palette 910 et ainsi de suite.

Sur le dernier système de stockage d'énergie électrique 100 du module 110, on place sur un couvercle 240 le second plot de liaison électrique 239 utilisé comme la seconde des deux bornes de sortie du module 110.

L'avantage qui résulte de cette configuration de module 110 est la suppression des pièces de liaison entre les différents systèmes de stockage d'énergie électrique 100.

D'autre part, les étapes de soudage sont diminuées puisqu'il ne reste que celle des palettes 910 bi couvercles sur les éléments bobinés de stockage d'énergie électrique.

L'homme de l'art appréciera un système 100 de stockage d'énergie électrique offrant une configuration, simple et fiable, réalisée par collage tout en proposant une connexion électrique précise et efficace.

D'autre part, ce système présente, par rapport aux dispositifs connus de l'état de l'art, un système d'étanchéité résistant à des pressions internes très élevées et dont l'étanchéité, ajustable, atteint des valeurs inférieures à 10⁻⁹ mbar.l.s⁻¹.

De plus, ce système 100 de stockage d'énergie électrique offre l'avantage de présenter des économies en termes de coûts, de temps, de d'espace.

Enfin, la présente invention n'est pas limitée aux supercondensateurs et peut être réalisée pour tout ensemble de stockage de haute énergie électrique. On peut citer, comme exemples non limitatifs, les générateurs, batteries ou condensateurs.

Bien entendu la présente invention n'est pas limitée aux modes de réalisation particuliers qui viennent d'être décrits mais s'étend à toute variante conforme à ses revendications. En particulier, la présente invention n'est pas limitée aux dessins annexés. Les références spécifiques illustrées dans les paragraphes précédents sont des exemples non limitatifs de l'invention.

## Revendications

1. Système de stockage d'énergie électrique (100) comprenant au moins un élément bobiné de stockage d'énergie électrique placé à l'intérieur d'une enveloppe (200), ladite enveloppe (200) renfermant l'élément bobiné de stockage d'energie électrique dans un corps principal (210) de l'enveloppe (200) et comprenant au moins un couvercle (230, 240), **caractérisé en ce que** ledit couvercle (230, 240), disposé à une extrémité du corps principal de l'enveloppe (200) et connecté électriquement par des moyens de liaison électrique (280) à l'élément bobiné de stockage d'énergie électrique, est fixé au corps principal (210) de l'enveloppe (200) par un moyen de collage (600)

2. Système selon la revendication précédente, **caractérisé en ce que** le moyen de collage (600) est disposé de façon à surmonter un joint de positionnement (500) intercalé entre le corps principal (210) de l'enveloppe (200) et le couvercle (230, 240).

3. Système selon la revendication précédente, **caractérisé en ce que** le joint de positionnement (500) et le moyen de collage (600) sont disposés dans une gorge annulaire (236, 246) délimitée par la paroi externe du corps principal (210) de l'enveloppe (200) et la face interne d'une collerette (232, 242) présente sur ledit couvercle (230, 240).

4. Système selon la revendication 2, **caractérisé en ce que** le joint de positionnement (500) et le moyen de collage (600) sont disposés dans une gorge annulaire (236, 246) délimitée par la paroi interne du corps principal (210) de l'enveloppe (200) et la face externe d'une collerette (232, 242) présente sur ledit couvercle (230, 240).

5. Système selon la revendication 2, **caractérisé en ce que** le joint de positionnement (500) et le moyen de collage (600) sont disposés dans une gorge annulaire (236, 246) délimitée par la paroi du corps principal (210) de l'enveloppe (200) et une double collerette (232, 233 ; 242, 243) portée par le couvercle (230,240).

6. Système selon la revendication 2, **caractérisé en ce que** le joint de positionnement (500) et le moyen de collage (600) sont disposés dans une gorge annulaire (236, 246) délimitée par une collerette (232, 242) solidaire d'un couvercle (230, 240) et par une double collerette (213, 215) portée par le corps principal (211) de l'enveloppe (200).

7. Système selon l'une quelconque des revendications précédentes, **caractérisé en ce que** le joint de positionnement (500) est réalisé en un matériau électriquement non conducteur.

8. Système selon l'une des revendications précédentes, **caractérisé en ce que** le moyen de collage (600) est une colle électriquement isolante.

9. Système selon l'une des revendications précédentes, **caractérisé en ce que** le moyen de collage (600) est une colle étanche aux gaz et aux fluides.

10. Système selon l'une des revendications précédentes, **caractérisé en ce que** le moyen de collage (600) est une colle de type époxy thermodurcissable.

11. Système selon l'une des revendications précédentes, **caractérisé en ce que** chaque couvercle (230, 240) comprend un disque de connexion électrique muni de plages de connexion (280) comme moyens de liaison électrique (280) et de plages de rigidité (290).

12. Système selon l'une des revendications précédentes, **caractérisé en ce que** l'épaisseur du couvercle (230, 240) au niveau de plages de connexion (280) est de l'ordre de 0.4 mm à 1mm, la connexion étant réalisée par soudage.

13. Système selon l'une des revendications précédentes, **caractérisé en ce que** l'épaisseur du couvercle au niveau de plages de connexion (280) est de l'ordre de 0.4 mm à 3 mm, la connexion étant réalisée par brasage.

14. Système selon l'une des revendications précédentes, **caractérisé en ce que** l'épaisseur du couvercle au niveau des plages de connexion (280) est de l'ordre de 0.4 mm à 3 mm, la connexion étant réalisée par brasage-diffusion.

15. Système selon l'une des revendications précédentes, **caractérisé en ce que** les plages de soudage (280) se présentent sous la forme de bossages convexes vers l'intérieur du corps principal (210) de l'enveloppe (200).

16. Système selon la revendication précédente, **caractérisée en ce que** l'élément bobiné de stockage d'énergie électrique comprend des tranches collectrices de courant comportant des plages de déformation concave complémentaires aux bossages convexes du couvercle (230, 240).

17. Système selon l'une quelconque des revendications 1 à 14, **caractérisé en ce que** le couvercle (230, 240) possède un fond intérieur plan, des plages de connexion (280) étant réalisées sous forme d'évidements sur la face extérieure du couvercle.

18. Système selon l'une quelconque des revendications 1 à 14, **caractérisé en ce que** le couvercle (230) possède un fond intérieur plan, des plages de rigidité étant formées par des nervures (292) en relief sur la face extérieure du couvercle.

19. Système selon l'une quelconque des revendications 1 à 14, **caractérisé en ce que** le couvercle (230) possède un fond intérieur plan et **en ce que** la connexion électrique entre l'élément bobiné de stockage d'énergie électrique et le couvercle est réalisée au moyen d'au moins une barrette de liaison (295) disposée entre le couvercle (230), à l'intérieur du corps principal de l'enveloppe (200), et la tranche collectrice de courant de l'élément bobiné de stockage d'énergie électrique.

20. Système selon la revendication précédente, **caractérisé en ce que** la barrette de liaison électrique (295) se présente sous la forme d'une pièce présentant une face externe (296) plate connectée électriquement au couvercle et une face interne (297) comprenant un bossage (298) connecté électriquement aux tranches collectrices de courant de l'élément bobiné de stockage d'énergie électrique.

21. Système selon l'une des revendications 19 ou 20, **caractérisé en ce que** la barrette de liaison électrique (295) se présente sous la forme d'une étoile regroupant plusieurs pièces présentant des bossages (298) organisés radialement autour du centre de l'étoile.

22. Système selon l'une des revendications précédentes, **caractérisé en ce qu'**il comporte entre les tranches collectrices de l'élément bobiné et la partie intérieure du couvercle, au moins une couche de feuille métallique conductrice mince, recouvrant au moins la surface des plages de connexion couvercle-tranches collectrices et ajoutée pour compenser les manques éventuels de matière de connexion lors du soudage du couvercle sur les tranches collectrices.

23. Système selon la revendication 22, **caractérisé en ce que** la feuille métallique mince est réalisée sous forme d'une étoile dont les branches recouvrent la surface des plages de connexion couvercle-tranches collectrices.

24. Système selon l'une des revendications 22 ou 23, **caractérisé en ce qu'**il comporte plusieurs couches de feuilles métalliques minces aptes à apporter une quantité importante de matière de connexion sans nécessiter un apport énergétique important pour les souder.

25. Système selon l'une des revendications précédentes en combinaison avec la revendication 12, **caractérisé en ce qu'**il comporte un apport de matière sur les tranches collectrices de courant de l'élément bobiné par shoopage desdites tranches collectrices.

26. Système selon l'une des revendications précédentes, **caractérisé en ce que** les plages de connexion des tranches collectrices de l'élément bobiné sont réalisées par couchage radial des tranches collectrices depuis le centre vers l'extérieur de l'élément bobiné de stockage d'énergie électrique.

27. Système selon l'une des revendications précédentes, **caractérisé en ce que** des plages de connexion sont rendues étanches aux fluides après leur connexion par apport d'une couche de colle ou de résine sur toute leur surface.

28. Système selon l'une des revendications précédentes, **caractérisé en ce qu'**il comprend au moins un soufflet (225) de sécurité anti-ouverture en cas de surpression interne, disposé sur le corps principal de l'enveloppe (200).

29. Système selon l'une des revendications précédentes, **caractérisé en ce qu'**il comprend au moins un soufflet (225) de sécurité anti-ouverture en cas de surpression interne, disposé sur un couvercle (230, 240 à l'entre une zone de collage du couvercle et l'intérieur de celui-ci.

30. Système selon l'une des revendications précédentes, **caractérisé en ce qu'**il comprend un canal circulaire central (150) disposé à l'intérieur du bobinage de l'élément bobiné de stockage d'énergie, ledit canal (150) débouchant de part en part au travers d'au moins un des couvercles (230, 240), pour permettre la circulation d'un fluide caloporteur à des fins de régulation thermique du système.

31. Système selon la revendication précédente, **caractérisé en ce que** le canal central (150) est formé d'un tube (152) en aluminium creux solidaire d'un des couvercles (230, 240), et collé sur l'autre couvercle par un moyen de collage coopérant avec une collerette centrale appartenant audit autre couvercle.

32. Module de stockage d'énergie électrique (110) comprenant au moins deux systèmes de stockage d'énergie électrique (100) selon l'une des revendications précédentes, **caractérisé en ce que** au moins deux couvercles (230) enfermant deux éléments bobinés de stockage d'énergie électrique disposés dans deux corps principaux d'enveloppes (210) juxtaposés, forment une pièce (900) bi-couvercle, commune aux deux systèmes de stockage d'énergie électrique (100), les éléments constituant ledit module étant fermés à leur extrémité opposée par des couvercles (240) respectifs.

33. Module selon la revendication précédente, **caractérisé en ce que** la pièce (900) bi-couvercle, comprend une palette (910) munie à ses deux extrémités de deux couvercles (230) reliés par une barette de liaison, chacun des deux couvercles étant destiné à s'assembler avec un des deux corps principaux d'enveloppes (210).

34. Module selon l'un des revendications 32 ou 33, de n systèmes de stockage d'énergie électrique (100) en association série, n étant supérieur ou égal à 2, **caractérisé en ce que** les systèmes sont reliés entre eux par paires au moyen de n-1 bi-couvercles (900), les bi-couvercles (900) reliant deux systèmes par paires consécutives, les systèmes disposés aux extrémités de l'association série constituant le module étant reliés à l'application externe au moyens de couvercles individuels (230, 240).

35. Module selon l'un des revendications 32 ou 33, de n systèmes de stockage d'énergie électrique en association parallèle, n étant supérieur ou égal à 2, **caractérisé en ce que** toutes les extrémités isopotentielles des systèmes sont reliées entre elles d'un même côté par un couvercle unique comportant autant de moyens de connexion, collerette (232, 242), joint de positionnement (510, 520), colle (610, 620), que de systèmes à connecter en parallèle.

36. Module selon l'une des revendications 32 à 35, comprenant au moins une combinaison de mises en série ou de mises en parallèle de systèmes ou de groupe de systèmes, **caractérisé en ce qu'**il comporte des pièces bi-couvercles (900) combinées pour permettre les dites mises en série ou en parallèles des dits systèmes ou groupes de systèmes.

37. Procédé de réalisation d'un système de stockage d'énergie électrique mis en oeuvre par au moins un élément bobiné de stockage d'énergie électrique placé à l'intérieur d'une enveloppe (200), ladite enveloppe (200) comprenant au moins un couvercle (230, 240) renfermant l'élément bobiné de stockage d'énergie électrique dans un corps principal de l'enveloppe (200) **caractérisé en ce qu'**il comprend au moins une étape (870) de fixation du couvercle (230, 240), à une extrémité du corps principal de l'enveloppe (200), par un moyen de collage (600) surmontant un joint de positionnement (500) intercalé entre le corps principal de l'enveloppe (200) et ledit couvercle (230, 240).

38. Procédé selon la revendication précédente **caractérisé en ce que** l'étape de fixation (870) est réalisé avant ou après une étape de connexion électrique (860) dudit couvercle (230, 240) par des moyens de liaison électrique (280) à l'élément bobiné de stockage d'énergie électrique.

39. Procédé selon l'une des revendications 37 ou 38, **caractérisé en ce que** l'étape de connexion électrique (860) comprend une étape de soudage laser par transparence sous pression des tranches collectrices de courant de l'élément bobiné de stockage d'énergie électrique avec des plages de soudage (280) sur le couvercle (230, 240).

40. Procédé selon l'une des revendications 37 ou 38, **caractérisé en ce que** l'étape de connexion électrique (860) comprend une étape de brasage /diffusion réalisant un dépôt de gallium sur le couvercle (230, 240) avant le brasage de l'ensemble couvercle (230, 240) et tranches collectrices de courant de l'élément bobiné de stockage d'énergie électrique.

## Claims

1. An electrical energy storage system (100) that includes at least one coiled electrical energy storage element placed within an envelope (200), said envelope (200) enclosing the coiled electrical energy storage element in a main,body (210) of the envelope (200) and having at least one lid (230, 240), **characterized in that** said lid (230, 240), placed at one end of the main body of the envelope (200) and electrically connected by electrical connection means (280) to the coiled electrical energy storage element, is attached to the main body (210) of the envelope (200) by an adhesive bonding means (600).

2. The system according to the preceding claim, **characterized in that** the adhesive bonding means (600) is placed so as to surmount a positioning gasket (500) inserted between the main body (210) of the envelope (200) and the lid (230, 240).

3. The system according to the preceding claim, **characterized in that** the positioning gasket (500) and the adhesive bonding means (600) are placed in an annular groove (236, 246) delimited by the external wall of the main body (210) of the envelope (200) and the internal face of a small collar (232, 242) present on said lid (230, 240).

4. The system according to claim 2, **characterized in that** the positioning gasket (500) and the adhesive bonding means (600) are placed in an annular groove (236, 246) delimited by the internal wall of the main body (210) of the envelope (200) and the external face of a small collar (232, 242) present on said lid (230, 240).

5. The system according to claim 2, **characterized in that** the positioning gasket (500) and the adhesive bonding means (600) are placed in an annular groove (236, 246) delimited by the wall of the main body (210) of the envelope (200) and a double small collar (232, 233; 242, 243) borne by the lid (230, 240).

6. The system according to claim 2, **characterized in that** the positioning gasket (500) and the adhesive bonding means (600) are placed in an annular groove (236, 246) delimited by a small collar (232, 242) firmly secured to a lid (230, 240) and by a double small collar (213, 215) borne by the main body (211) of the envelope (200).

7. The system according to any of the preceding claims, **characterized in that** the positioning gasket (500) is made in an electrically non-conducting material.

8. The system according to one of the preceding claims, **characterized in that** the adhesive bonding means (600) is an electrically insulating adhesive.

9. The system according to one of the preceding claims, **characterized in that** the adhesive bonding means (600) is an adhesive which is impervious to gases and fluids.

10. The system according to one of the preceding claims, **characterized in that** the adhesive bonding means (600) is an adhesive of the thermosetting epoxy type.

11. The system according to one of the preceding claims, **characterized in that** each lid (230, 240) includes an electrical connection disk equipped with connection strips (280), used as electrical connection means (280) and stiffening strips (290).

12. The system according to one of the preceding claims, **characterized in that** the thickness of the lid (230, 240) at connection strips (280) is of the order of 0.4 mm to 1 mm, the connection being effected by welding.

13. The system according to one of the preceding claims, **characterized in that** the thickness of the lid at the connection strips (280) is of the order of 0.4 mm to 3 mm, the connection being effected by brazing.

14. The system according to one of the preceding claims, **characterized in that** the thickness of the lid at the connection strips (280) is of the order of 0.4 mm to 3 mm, with the connection being effected by diffusion brazing.

15. The system according to one of the preceding claims, **characterized in that** the welding strips (280) appear as bosses convex towards the main body (210) of the envelope (200).

16. The system according to the preceding claim, **characterized in that** the coiled electrical energy storage element comprises current-collecting sections including concave deformation elements which mate the convex bosses of the lid (230, 240).

17. The system according to any of claims 1 to 14, **characterized in that** the lid (230, 240) has a flat inner bottom, connection strips (280) being made in the form of recesses on the outer face of the lid.

18. The system according to any of claims 1 to 14, **characterized in that** the lid (230) has a flat inner bottom, stiffening strips being formed from raised ribs (292) on the outer face of the lid.

19. The system according to any of claims 1 to 14, **characterized in that** the lid (230) has a flat inner bottom, and **in that** the electrical connection between the coiled electrical energy storage element and the lid is achieved by means of at least one small connecting strap (295) placed between the lid (230), within the main body of the envelope (200), and the current-collecting section of the coiled electrical energy storage element.

20. The system according to the preceding claim, **characterized in that** the electrical connection strap (295) appears as a part with a flat external face (296) which is electrically connected to the lid, and an internal face (297) comprising a boss (298) electrically connected to the current-collecting sections of the coiled electrical energy storage element.

21. The system according to one of claims 19 or 20, **characterized in that** the electrical connection strap (295) assumes the form of a star grouping together several parts having bosses (298) radially organized around the centre of the star.

22. The system according to one of the preceding claims, **characterized in that**, between the current-collecting sections of the coiled element and the inner portion of the lid, it has at least one thin layer of conducting metal sheeting, covering at least the surface of the lid/current-collecting section connection strips, and added in order to compensate for any possible lack of connection material during the welding of the lid onto the current-collecting sections.

23. The system according to claim 22, **characterized in that** the thin metal sheet is made in the form of a star, the branches of which cover the surface of the lid/current-collecting section connection strips.

24. The system according to one of claims 22 or 23, **characterized in that** it includes several thin metal sheeting layers suitable for supplying a large amount of connection material without requiring significant supply of energy for the welding.

25. The system according to one of the preceding claims, combined with claim 12, **characterized in that** it includes provision of material onto the current-collecting sections of the coiled element by metal spraying onto said current-collecting elements.

26. The system according to one of the preceding claims, **characterized in that** the connection strips of the current-collecting sections of the coiled element are made by radial layering of the current-collecting sections from the centre to the outside of the coiled electrical energy storage element.

27. The system according to one of the preceding claims, **characterized in that** connection strips are made impervious to fluids after their connection by adding a layer of adhesive or of resin over their entire surface.

28. The system according to one of the preceding claims, **characterized in that** it includes at least one safety anti-opening bellows (225), in the event of internal overpressure, placed on the main body of the envelope (200).

29. The system according to one of the preceding claims; **characterized in that** it includes at least one safety anti-opening bellows (225), in the event of internal overpressure, placed on a lid (230, 240) between an adhesive bonding area of the lid and the interior of the latter.

30. The system according to one of the preceding claims, **characterized in that** it includes a circular central channel (150) placed within the coil of the coiled energy storage element, with said channel (150) opening out right through at least one of the lids (230, 240), to allow circulation of a heat transfer fluid for use in the thermal regulation of the system.

31. The system according to the preceding claim, **characterized in that** the central channel (150) is formed from a hollow aluminium tube (152) firmly secured to one of the lids (230, 240), and adhesively bonded to the other lid by adhesive bonding means cooperating with a small central collar belonging to said other lid.

32. An electrical energy storage module (110) with at least two electrical energy storage systems (100) according to one of the preceding claims, **characterized in that** at least two lids (230) closing off two coiled electrical energy storage elements placed in two juxtaposed main envelope bodies (210), form a twin-lidded part (900) common to both electrical energy storage systems (100), with the elements making up said module being closed off at their opposite ends by lids (240) respectively.

33. The module according to the preceding claim, **characterized in that** the twin-lidded part (900) comprises a plate (910) equipped at its two ends with two lids (230) which are connected through a connection strap, with each of the two lids being intended to be assembled to one of the two main envelope bodies (210).

34. The module according to one of claims 32 or 33, of n electrical energy storage systems (100) in a series combination, wherein n is equal to or greater than 2, **characterized in that** the systems are connected together pairwise by means of n-1 twin lids (900), with the twin lids (900) connecting two systems in consecutive pairs, the systems placed at the ends of the series combination forming the module being connected to the external application by means of individual lids (230, 240).

35. The module according to one of claims 32 or 33, of n electrical energy storage systems in a parallel combination, wherein n is equal to or greater than 2, **characterized in that** all the isopotential ends of the systems are connected together on a same side through a single lid including as many connection means, small collar (232, 242), positioning gasket (510, 520), adhesive (610,620), as there are systems to be connected in parallel.

36. The module according to one of claims 32 to 35, including at least one series or parallel combination of systems or groups of systems, **characterized in that** it includes twin-lidded parts (900) which are combined to allow said connection in series or in parallel of said systems or groups of systems.

37. A method for making an electrical energy storage system implemented with at least one coiled electrical energy storage element placed within an envelope (200), said envelope (200) including at least one lid (230, 240) containing the coiled electrical energy storage element in a main body of the envelope (200), **characterized in that** it comprises at least one step (870) for attaching the lid (230, 240) at one end of the main body of the envelope (200), by adhesive bonding means (600) surmounting a positioning gasket (500) inserted between the main body of the envelope (200) and said lid (230, 240).

38. The method according to the preceding claim, **characterized in that** the attachment step (870) is performed before or after a step (860) for electrically connecting said lid (230, 240) by electrical connection means (280) to the coiled electrical energy storage element.

39. The method according to one of claims 37 or 38, **characterized in that** the electrical connection step (860) comprises a step for laser welding by transparency under pressure, the current-collecting sections of the coiled electrical energy storage element with welding strips (280) on the lid (230, 240).

40. The method according to one of claims 37 or 38, **characterized in that** the electrical connection step (860) comprises a brazing/diffusion step achieving deposition of gallium onto the lid (230, 240) before the brazing of the lid (230, 240)/current-collecting sections assembly of the coiled electrical energy storage element.

## Patentansprüche

1. System zur Speicherung elektrischer Energie (100), das wenigstens ein gewickeltes Element zur Speicherung elektrischer Energie umfasst, das innerhalb einer Hülle (200) angeordnet ist, wobei die Hülle (200) das gewickelte Element zur Speicherung elektrischer Energie in einem Hauptteil (210) der Hülle (200) einschließt und wenigstens einen Deckel (230, 240) umfasst, **dadurch gekennzeichnet, dass** der Deckel (230, 240), der an einem Ende des Hauptteils der Hülle (200) angeordnet und der durch ein elektrisches Verbindungsmittel (280) mit dem gewickelten Element zur Speicherung elektrischer Energie elektrisch verbunden ist, am Hauptteil (210) der Hülle (200) durch ein Klebemittel (600) befestigt ist.

2. System nach dem vorhergehenden Anspruch, **dadurch gekennzeichnet, dass** das Klebemittel (600) derart angeordnet ist, dass es eine Positionierungsdichtung (500) überwölbt, die zwischen dem Hauptteil (210) der Hülle (200) und dem Deckel (230, 240) angeordnet ist.

3. System nach dem vorhergehenden Anspruch, **dadurch gekennzeichnet, dass** die Positionierungsdichtung (500) und das Klebemittel (600) in einer ringförmigen Rille (236, 246) angeordnet sind, die von der Außenwand des Hauptteils (210) der Hülle (200) und der Innenseite eines am Deckel (230, 240) befindlichen Kragens (232, 242) abgegrenzt wird.

4. System nach Anspruch 2, **dadurch gekennzeichnet, dass** die Positionierungsdichtung (500) und das Klebemittel (600) in einer ringförmigen Rille (236, 246) angeordnet sind, die von der Innenwand des Hauptteils (210) der Hülle (200) und der Außenseite eines am Deckel (230, 240) befindlichen Kragens (232, 242) abgegrenzt wird.

5. System nach Anspruch 2, **dadurch gekennzeichnet, dass** die Positionierungsdichtung (500) und das Klebemittel (600) in einer ringförmigen Rille (236, 246) angeordnet sind, die von der Wand des Hauptteils (210) der Hülle (200) und einem am Deckel (230, 240) befindlichen doppelten Kragen (232, 233; 242, 243) abgegrenzt wird.

6. System nach Anspruch 2, **dadurch gekennzeichnet, dass** die Positionierungsdichtung (500) und das Klebemittel (600) in einer ringförmigen Rille (236, 246) angeordnet sind, die von einem Kragen (232, 242), der fest mit einem Deckel (230, 240) verbunden ist, und von einem doppelten Kragen (213, 215), der sich am Hauptteil (211) der Hülle (200) befindet, abgegrenzt wird.

7. System nach einem der vorhergehenden Ansprüche, **dadurch gekennzeichnet, dass** die Positionierungsdichtung (500) aus einem elektrisch nichtleitenden Material hergestellt ist.

8. System nach einem der vorhergehenden Ansprüche, **dadurch gekennzeichnet, dass** das Klebemittel (600) ein elektrisch isolierender Klebstoff ist.

9. System nach einem der vorhergehenden Ansprüche, **dadurch gekennzeichnet, dass** das Klebemittel (600) ein gegenüber Gasen und Fluiden dichter Klebstoff ist.

10. System nach einem der vorhergehenden Ansprüche, **dadurch gekennzeichnet, dass** das Klebemittel (600) ein Klebstoff von einem wärmeaushärtenden Epoxidtyp ist.

11. System nach einem der vorhergehenden Ansprüche, **dadurch gekennzeichnet, dass** jeder Deckel (230, 240) eine elektrische Anschlussscheibe umfasst, die mit Anschlussbereichen (280) als Mittel zur elektrischen Verbindung (280) und Steifigkeitsbereichen (290) ausgestattet ist.

12. System nach einem der vorhergehenden Ansprüche, **dadurch gekennzeichnet, dass** die Dicke des Deckels (230, 240) im Bereich der Anschlussbereiche (280) in der Größenordnung von 0,4 mm bis 1 mm liegt, wobei der Anschluss durch Schweißen ausgeführt ist.

13. System nach einem der vorhergehenden Ansprüche, **dadurch gekennzeichnet, dass** die Dicke des Deckels im Bereich der Anschlussbereiche (280) in der Größenordnung von 0,4 mm bis 3 mm liegt, wobei der Anschluss durch Löten ausgeführt ist.

14. System nach einem der vorhergehenden Ansprüche, **dadurch gekennzeichnet, dass** die Dicke des Deckels im Bereich der Anschlussbereiche (280) in der Größenordnung von 0,4 mm bis 3 mm liegt, wobei der Anschluss durch Diffusionslöten ausgeführt ist.

15. System nach einem der vorhergehenden Ansprüche, **dadurch gekennzeichnet, dass** die Schweißbereiche (280) in der Form von Höckern vorliegen, die in der Richtung zum Inneren des Hauptteils (210) der Hülle (200) konvex sind.

16. System nach dem vorhergehenden Anspruch, **dadurch gekennzeichnet, dass** das gewickelte Element zur Speicherung elektrischer Energie Stromsammelscheiben umfasst, die Bereiche mit konkaver Verformung, komplementär zu den konvexen Höckern des Deckels (230, 240), umfassen.

17. System nach einem der Ansprüche 1 bis 14, **dadurch gekennzeichnet, dass** der Deckel (230, 240) einen ebenen inneren Boden umfasst, wobei Anschlussbereiche (280) in Form von Aussparungen auf der Außenseite des Deckels ausgeführt sind.

18. System nach einem der Ansprüche 1 bis 14, **dadurch gekennzeichnet, dass** der Deckel (230) einen ebenen inneren Boden umfasst, wobei Steifigkeitsbereiche durch hervorstehende Rippen (292) auf der Außenseite des Deckels gebildet werden.

19. System nach einem der Ansprüche 1 bis 14, **dadurch gekennzeichnet, dass** der Deckel (230) einen ebenen inneren Boden umfasst und dadurch, dass die elektrische Verbindung zwischen dem gewickelten Element zur Speicherung elektrischer Energie und dem Deckel mittels wenigstens einem Verbindungssteg (295) realisiert ist, der zwischen dem Deckel (230), im Inneren des Hauptteils der Hülle (200), und der Stromsammelscheibe des gewickelten Elements zur Speicherung elektrischer Energie angeordnet ist.

20. System nach dem vorhergehenden Anspruch, **dadurch gekennzeichnet, dass** der Steg zur elektrischen Verbindung (295) in Form eines Teils vorliegt, das eine flache äußere Fläche (296) aufweist, die elektrisch mit dem Deckel verbunden ist, sowie eine innere Fläche (297), die einen Höcker (298) umfasst, der elektrisch mit den Stromsammelscheiben des gewickelten Elements zur Speicherung elektrischer Energie verbunden ist.

21. System nach einem der Ansprüche 19 oder 20, **dadurch gekennzeichnet, dass** der Steg zur elektrischen Verbindung (295) in Form eines Sterns vorliegt, der mehrere Teile gruppiert, die Höcker (298) aufweisen, die radial um das Zentrum des Sterns herum angeordnet sind.

22. System nach einem der vorhergehenden Ansprüche, **dadurch gekennzeichnet, dass** es zwischen den Sammelscheiben des gewickelten Elements und dem inneren Teil des Deckels wenigstens eine Schicht mit einer dünnen, leitenden, metallischen Folie umfasst, die wenigstens die Oberfläche der Deckel-Sammelscheiben-Anschlussbereiche abdeckt und die hinzugefügt wird, um das eventuelle Fehlen von Verbindungsmaterial durch das Schweißen des Deckels auf die Sammelscheiben zu kompensieren.

23. System nach Anspruch 22, **dadurch gekennzeichnet, dass** die dünne metallische Folie in Form eines Sterns ausgeführt ist, dessen Arme die Oberfläche der Deckel- Sammelscheiben-Anschlussbereiche abdecken.

24. System nach einem der Ansprüche 22 oder 23, **dadurch gekennzeichnet, dass** es mehrere Schichten mit dünnen metallischen Folien umfasst, die dafür eingerichtet sind, eine erhebliche Menge an Verbindungsmaterial bereitzustellen, ohne dass eine erhebliche Energiezufuhr für deren Verschweißen erforderlich ist.

25. System nach einem der vorhergehenden Ansprüche in Kombination mit Anspruch 12, **dadurch gekennzeichnet, dass** sie ein Hinzufügen von Material auf die Stromsammelscheiben des gewickelten Elements durch eine Metallisierung der Sammelscheiben umfasst.

26. System nach einem der vorhergehenden Ansprüche, **dadurch gekennzeichnet, dass** die Anschlussbereiche der Sammelscheiben des gewickelten Elements durch eine radiale Beschichtung der Sammelscheiben ausgehend vom Zentrum zum Äußeren des gewickelten Elements zur Speicherung elektrischer Energie hin ausgeführt sind.

27. System nach einem der vorhergehenden Ansprüche, **dadurch gekennzeichnet, dass** Anschlussbereiche nach ihrem Anschluss durch das Hinzufügen einer Schicht aus Kleber oder Harz auf ihrer gesamten Oberfläche für Fluide abgedichtet werden.

28. System nach einem der vorhergehenden Ansprüche, **dadurch gekennzeichnet, dass** es wenigstens einen Sicherheits-Balg (225) gegen das Öffnen im Falle eines inneren Überdrucks umfasst, der auf dem Hauptteil der Hülle (200) angeordnet ist.

29. System nach einem der vorhergehenden Ansprüche, **dadurch gekennzeichnet, dass** es wenigstens einen Sicherheits-Balg (225) gegen das Öffnen im Falle eines inneren Überdrucks umfasst, der an einem Deckel (230, 240) zwischen einer Klebezone des Deckels und dessen Innerem angeordnet ist.

30. System nach einem der vorhergehenden Ansprüche, **dadurch gekennzeichnet, dass** es einen zentralen mittleren Kanal (150) umfasst, der im Inneren der Wicklung des gewickelten Elements zur Energiespeicherung angeordnet ist, wobei der Kanal (150) durch wenigstens einen der Deckel (230, 240) hindurch mündet, um das Zirkulieren eines wärmeabführenden Fluids zur thermischen Regelung des Systems zu gestatten.

31. System nach dem vorhergehenden Anspruch, **dadurch gekennzeichnet, dass** der zentrale Kanal (150) durch eine hohle Röhre (152) aus Aluminium gebildet wird, die fest mit einem der Deckel (230, 240) verbunden ist und die am anderen Deckel durch ein Klebemittel geklebt ist, das mit einem zentralen Kragen zusammenarbeitet, der zu diesem anderen Deckel gehört.

32. Modul zur Speicherung elektrischer Energie (110), das wenigstens zwei Systeme zur Speicherung elektrischer Energie (100) nach einem der vorhergehenden Ansprüche umfasst, **dadurch gekennzeichnet, dass** wenigstens zwei Deckel (230), die zwei gewickelte Elemente zur Speicherung elektrischer Energie, die in zwei nebeneinander liegenden Hüllen-Hauptteilen (210) angeordnet sind, einschließen, ein zweideckliges Teil (900) bilden, das den beiden Systemen zur Speicherung elektrischer Energie (100) gemeinsam ist, wobei die Elemente, die das Modul bilden, an ihrem gegenüberliegenden Ende durch entsprechende Deckel (240) verschlossen sind.

33. Modul nach dem vorhergehenden Anspruch, **dadurch gekennzeichnet, dass** das zweidecklige Teil (900) einen Flügel (910) umfasst, der an seinen beiden Enden mit zwei Deckeln (230) ausgestattet ist, die durch einen Verbindungssteg verbunden sind, wobei jeder der beiden Deckel dafür vorgesehen ist, sich mit einem der beiden Hüllenhauptteile (210) zusammenzusetzen.

34. Modul nach einem der Ansprüche 32 oder 33 von n Systemen zur Speicherung elektrischer Energie (100), die in einer Reihe zusammengestellt sind, wobei n größer oder gleich 2 ist, **dadurch gekennzeichnet, dass** die Systeme untereinander paarweise durch n-1 Doppeldeckel (900) verbunden sind, wobei die Doppeldeckel (900) jeweils zwei Systeme in aufeinanderfolgenden Paaren verbinden, wobei die Systeme, die an den Enden der das Modul bildenden Reihenzusammenstellung angeordnet sind, mit der externen Anwendung durch Einzeldeckel (230, 240) verbunden sind.

35. Modul nach einem der Ansprüche 32 oder 33 von n Systemen zur Speicherung elektrischer Energie (100), die parallel zusammengestellt sind, wobei n größer oder gleich 2 ist, **dadurch gekennzeichnet, dass** alle Enden gleichen Potentials der Systeme untereinander auf ein und derselben Seite durch einen einzigen Deckel verbunden sind, der so viele Anschlussmittel, Kragen (232, 242), Positionierungsdichtungen (510, 520), Klebeelemente (610, 620) umfasst, wie es Systeme gibt, die parallel zusammenzuschließen sind.

36. Modul nach einem der Ansprüche 32 bis 35, das wenigstens eine Kombination der Reihenschaltung oder der Parallelschaltung von Systemen oder von Systemgruppen umfasst, **dadurch gekennzeichnet, dass** es kombinierte zweidecklige Teile (900) umfasst, um die Reihenschaltungen oder Parallelschaltungen der Systeme oder der Systemgruppen zu gestatten.

37. Verfahren zum Realisieren eines Systems zur Speicherung elektrischer Energie das durch wenigstens ein gewickeltes Element zur Speicherung elektrischer Energie ausgeführt wird, das innerhalb einer Hülle (200) angeordnet ist, wobei die Hülle (200) wenigstens einen Deckel (230, 240) umfasst, der das gewickelte Element zur Speicherung elektrischer Energie in einem Hauptteil der Hülle (200) einschließt, **dadurch gekennzeichnet, dass** es wenigstens einen Schritt (870) zum Befestigen des Deckels (230, 240) an einem Ende des Hauptteils der Hülle (200) umfasst, und dies durch ein Klebemittel (600), das eine Positionierungsdichtung (500) überwölbt, die zwischen dem Hauptteil der Hülle (200) und dem Deckel (230, 240) angeordnet ist.

38. Verfahren nach dem vorhergehenden Anspruch, **dadurch gekennzeichnet, dass** der Befestigungsschritt (870) vor oder nach einem Schritt zum elektrischen Verbinden (860) des Deckels (230, 240) durch elektrische Verbindungsmittel (280) mit dem gewickelten Element zur Speicherung elektrischer Energie ausgeführt wird.

39. Verfahren nach einem der Ansprüche 37 oder 38, **dadurch gekennzeichnet, dass** der Schritt zum elektrischen Verbinden (860) einen Schritt zum Laserschweißen durch Transparenz unter Druck der Stromsammelscheiben des gewickelten Elements zur Speicherung elektrischer Energie mit Schweißbereichen (280) am Deckel (230, 240) umfasst.

40. Verfahren nach einem der Ansprüche 37 oder 38, **dadurch gekennzeichnet, dass** der Schritt zum elektrischen Verbinden (860) einen Schritt zum Löten/Diffundieren umfasst, der vor dem Löten der Einheit aus Deckel (230, 240) und Stromsammelscheiben des gewickelten Elements zur Speicherung elektrischer Energie eine Auftragung von Gallium auf dem Deckel (230, 240) ausführt.
